Europäisches Patentamt

European Patent Office

Office européen des brevets

(11) Publication number: **0 429 278 A2**

## (12) EUROPEAN PATENT APPLICATION

(21) Application number: **90312574.8**

(22) Date of filing: **19.11.90**

(51) Int. Cl.5: **B60S 1/34**

(30) Priority: **20.11.89 GB 8926219**

(43) Date of publication of application:
**29.05.91 Bulletin 91/22**

(84) Designated Contracting States:
**BE DE ES FR IT**

(71) Applicant: **TRICO-FOLBERTH LIMITED**
**Great West Road**
**Brentford Middlesex TW8 9HP(GB)**

(72) Inventor: **Frimley, Charles Henry**
**25, Redford Road**
**Windsor, Berkshire(GB)**

(74) Representative: **Pedder, James Cuthbert**
**J.C. Pedder & Co. 38 Norbury Cross**
**Norbury London SW16 4JQ(GB)**

(54) **Lock-back control device for a windscreen or like surface wiper.**

(57) A lock-back control device (2) for windscreen or like surface wipers comprising a body member (4) for attachment to the head (30) of a windscreen wiper arm and carrying a movable stop member (6) movable between a first position in which it lies in the path of movement of the arm proper or arm retainer (34) to prevent the arm from moving to a lock back position and a second position where it permits movement of the arm to a lock-back position.

## FIG. 2.

EP 0 429 278 A2

# LOCK-BACK CONTROL DEVICE FOR A WINDSCREEN OR LIKE SURFACE WIPER

This invention relates to a lock-back control device for a windscreen or like surface wiper.

Windscreen wipers for cars and other vehicles are usually provided with some means for holding the wiper blades away from the windscreen (commonly referred to as "lock-back") for both assembly and dissembly of the windscreen wiper, particularly of the blade to and from the wiper arm, and also to enable the windscreen to be cleaned. Commercially speaking, while automobiles and commercial road vehicles are the largest users of windscreen wipers, wipers are also fitted to railway vehicles, both to locomotives and to multiple unit stock. A problem has been discovered with multiple unit stock where an eight car train is made up from two four car sets and is used on single track working. In these circumstances, when such a multiple unit train passes through a tunnel, air pressure distribution between the two four car sets causes the windscreen wipers to lift off their associated windscreen and, due to the close proximity of the two end cabs, the wiper blades can come into contact with the effect of serious damage to the wiper blades.

Such a problem could readily be overcome by the use of windscreen wipers having no lock-back but, unfortunately, with some railway vehicles, this is not possible as the wipers are carried on access panels which cannot be opened unless a lock-back facility is present.

The invention seeks to provide a lock back control device for a windscreen or like surface wiper which enables the lock back of wipers exhibiting this feature to be controlled so that the lock-back can be selectively enabled or disabled.

According to the invention, there is provide a lock-back control device for windscreen or like surface wipers comprising a body member for attachment to the head of a windscreen wiper arm and carrying a movable stop member movable between a first position in which it lies in the path of movement of the arm proper or arm retainer to prevent the arm from moving to a lock back position and a second position where it permits movement of the arm to a lock-back position.

Preferably, the stop member is pivotably connected to the body member by means of a pivot extending parallel to the pivot axis of the windscreen wiper arm so that it can move pivotably between its first and second positions. The stop member may be biassed towards its first position.

Preferably the stop member is pivotably connected to the body member so that it can move pivotably between its first and second positions. The stop member may suitably be biassed towards its first position.

The invention will now be described in greater detail, by way of example, with reference to the drawings, in which:

Figure 1 is a perspective view of one form of the control device in accordance with the invention:

Figure 2 is a side view of a part of a windscreen wiper arm fitted with the control device of figure 1 with the stop member in its first position, and

Figure 3 is a view similar to figure 2 but showing the arm locked-back and the stop member in its second position.

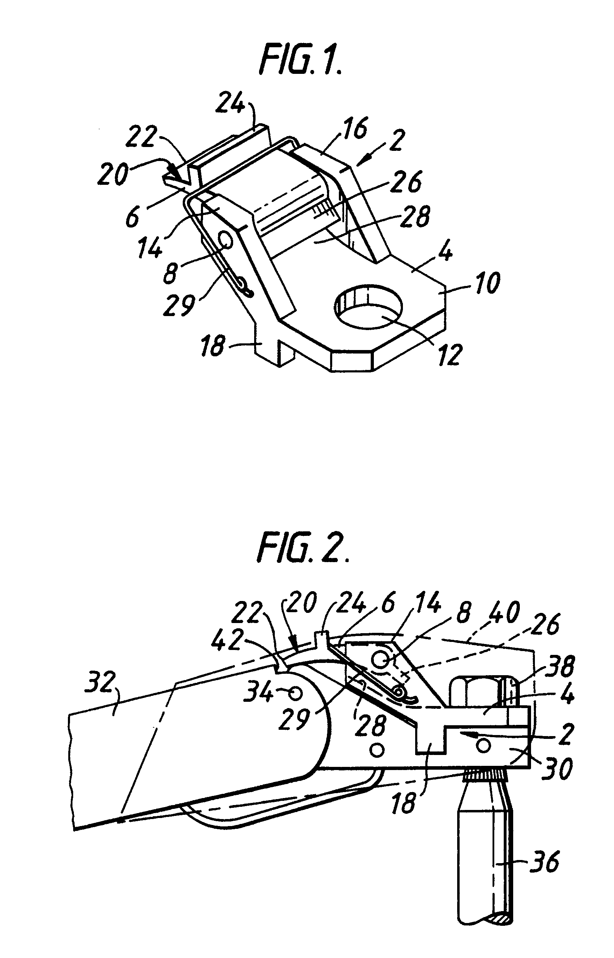

Referring firstly to figure 1, there is shown a control device 2 comprising a body member 4 to which is pivoted a stop member 6, pivoted at 8. The body member 4 has a base portion 10 having an aperture 12 therein and carries two ears 14 and 16 as well as two depending elements, one of which can be seen at 18. The stop member 6 is pivoted between the ears 14 and 16 and has a curved part 20 ending in a stop end 22. Projecting upwardly from this curved part 20 is an operating element 24 which is used for operating the device 2. The other end of the stop member 6 has an extension 26 which cooperates with the floor 28 of the body member 4 for a purpose to be described. The stop member 6 is biased in an anticlockwise direction by a spring 29.

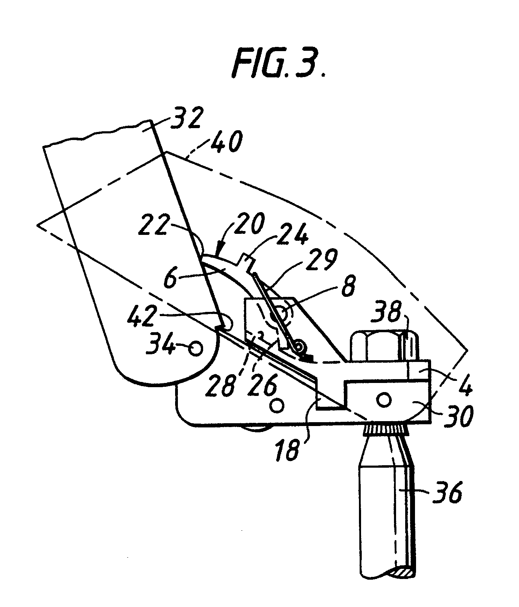

Figures 2 and 3 show the device in operation. In these figures 30 represents an arm head, 32 is an arm retainer, 34 is the pivot between the arm head and the arm retainer, 36 is the drive spindle and 38 is the nut by means of which the arm head is attached to the spindle. These parts are normal standard parts of a wiper system and do not require any modification for use with the present control device 2. The only non standard part involved is the head cover, shown in chain lines at 40. The head cover 40 is modified only in that it has an aperture (not shown) in the upper part thereof through which the operating element 24 can be accessed either by the insertion of the fingers or by the fact that the operating member protrudes through the aperture.

To assemble the control on an existing wiper arm, the arm head cover 40 is removed and the nut 38 which holds the arm head 30 on the drive spindle 36 is unscrewed. Then the control device 2 is placed with the aperture 12 over the end of the spindle 36 and the two depending elements 18 located on opposite sides of the arm head 30. The nut 38 is then replace and screwed up, whereupon the device is assembled on the wiper arm. All that then remains is to replace the removed head cover 40 with a new apertured head cover so that access can be had to the operating element 24 of the stop member 6.

The arrangement is now basically as shown in figure 2, in which the stop member v6 is in its first position. In this position, the amount of pivotal movement of the arm retainer 32, and thus the wiper arm, is limited by the spacing between the stop end 22 of the stop member and the end surface 42 of the retainer 32. This spacing allows for motion of the arm to a sufficient extent to take up the curvature of the windscreen or like surface being wiped but prevents any significant lift of the arm and thus the wiper blade from the windscreen.

When it is required to allow lock back of the arm, the stop member 6 is pivoted clockwise as seen in the drawings by manipulation of the operating element 24 until the end 22 is raised clear of the end 42 of the retainer 32. The arm may then be raised from the windscreen or like surface. Continued movement of the arm in this direction will entrain the stop member 6 since the end 22 thereof will engage the upper surface 44 of the retainer. Excessive raising of the arm is prevented by the engagement of the extension 26 with the floor 28 of the body member 4. The actual lock-back itself is achieved in the usual way by the overcentre action of the arm spring not shown. The situation is now as depicted in figure 3 in which figure the stop member is depicted in its second position.

When returning the arm and blade to the windscreen, the end 22 of the stop member 6 will follow the surface of the retainer 32 and will eventually drop off the end thereof, under the action of the spring 29, and take up its first position again automatically.

It will be understood that various modifications may be made to the above described embodiment without departing from the scope of the invention. For example, although a stop member 6 has been shown which is pivoted about an horizontal axis, it would be possible to design a further alternative form in which a vertical axis is used. Furthermore, the pivot action of the stop member could be replaced by a sliding action.

It will also be understood that although the invention was particularly designed for use on trains, it could be equally well be applied to cars, vans, lorries or other vehicles where there may be a need to limit the lock-back facility.

From the above description, it will be seen that the embodiment of the invention described provides a relatively simple method of enabling or disabling the lock-back feature of a windscreen wiper which can be applied both to existing wiper systems and to systems when supplied as original equipment.

**Claims**

1. A lock-back control device for windscreen or like surface wipers comprising a body member (4) for attachment to the head (30) of a windscreen wiper arm and carrying a movable stop member (6) movable between a first position in which it lies in the path of movement of the arm proper or arm retainer (32) to prevent the arm from moving to a lock back position and a second position where it permits movement of the arm to a lock-back position.

2. A lock-back control device as claimed in claim 1, characterised in that the stop member (6) is pivotably connected to the body member (4) by means of a pivot (8) extending parallel to the pivot axis (34) of the windscreen wiper arm so that it can move pivotably between its first and second positions.

3. A lock-back control device as claimed in claim 1 or 2, characterised in that the stop member (6) is biassed towards its first position.

4. A lock-back control device as claimed in claim 1, 2 or 3, characterised in that the body member (4) is provided with an aperture (12) through which a drive spindle (36) for the windscreen wiper arm can pass, the drive spindle (36) carrying a nut which seats against the body member (4) to hold the body member (4) and the arm head (30) on the drive spindle (36).

5. A lock-back control device as claimed in claim 4, characterised in that the body member (4) carries a pair of ears (14, 16) extending generally in the longitudinal direction of the wiper arm and the stop member (6) is pivoted between the ears (14, 16).

6. A lock-back control device as claimed in claim 5, characterised in that the body (4) has a pair of depending portions (18) adapted to lie on opposite sides of the arm head (30) so as to locate the device on the arm head (30).

7. A lock-back control device as claimed in claim 6, characterised in that the stop member (6) has a stop end (22) which, in the first position lies in the line of movement of the arm retainer (32) so as to prevent sufficient movement of the arm retainer (32) for lock-back but allow sufficient movement for normal operation of the windscreen wiper.

8. A lock-back control device as claimed in claim 7, characterised in that the stop end (22) of the stop member (6) will engage over the exterior of the arm retainer (32) in its second position on raising of the arm and the stop member (6) has an extension (26) which engages a cooperating surface (28) on the body member (4) to prevent excessive raising of the wiper arm when moved to its lock-back position.

9. A lock-back control device as claimed in claim 8, characterised in that the stop member (6) automatically returns to its first position when the wiper arm is returned from its lock-back position to its normal operating position.

10. A lock-back device as claimed in claim 1, characterised in that the the stop member (6) is slidably connected to the body member (4) so that it can move slidably between its first and second positions.

*FIG.1.*

*FIG.2.*

# FIG.3.